Europäisches Patentamt

European Patent Office

Office européen des brevets

(11) Numéro de publication: **0 146 478**
A2

## (12) DEMANDE DE BREVET EUROPEEN

(21) Numéro de dépôt: **84402609.6**

(22) Date de dépôt: **14.12.84**

(51) Int. Cl.⁴: **G 02 B 6/44**

(30) Priorité: **20.12.83 FR 8320372**

(43) Date de publication de la demande: **26.06.85 Bulletin 85/26**

(84) Etats contractants désignés: **CH DE GB IT LI NL**

(71) Demandeur: **LIGNES TELEGRAPHIQUES ET TELEPHONIQUES L.T.T., 1, rue Charles Bourseul, F-78702 Conflans-Ste-Honorine (FR)**

(72) Inventeur: **Staath, Jean-Claude, THOMSON-CSF SCPI 173, bld Haussmann, F-75379 Paris Cedex 08 (FR)**
Inventeur: **Dubois, Gilles, THOMSON-CSF SCPI 173, bld Haussmann, F-75379 Paris Cedex 08 (FR)**
Inventeur: **Paumier, Marcel, THOMSON-CSF SCPI 173, bld Haussmann, F-75379 Paris Cedex 08 (FR)**

(74) Mandataire: **Benoit, Monique et al, THOMSON-CSF SCPI 173, Bld Haussmann, F-75379 Paris Cedex 08 (FR)**

(54) **Dispositif de raccordement de câbles, notamment à fibres optiques.**

(57) L'invention a pour objet une boîte de raccordement de câbles.

Cette boîte (R) porte une pluralité de modules (M), éventuellement mobiles ou amovibles; chacun des modules, constitué par exemple par une plaque, porte une épissure (E) ou un groupe d'épissures et assure le stockage (1) de la surlongueur d'éléments nécessaire pour effectuer l'épissure.

Application aux câbles optiques aériens.

ACTORUM AG

EP 0 146 478 A2

# DISPOSITIF DE RACCORDEMENT DE CABLES,
## NOTAMMENT A FIBRES OPTIQUES

La présente invention a pour objet un dispositif de raccordement par épissurage de câbles, notamment de câbles à fibres optiques.

Un câble, classique ou optique, comporte en général une pluralité de conducteurs (électriques ou optiques) utilisés pour la transmission. Dans le cas d'un câble optique, celui-ci peut être constitué, par exemple, par un certain nombre de supports cylindriques rainurés appelés joncs, chacun des joncs portant une pluralité de fibres optiques disposées dans les rainures. Le raccordement de deux câbles se fait par épissurage des fibres optiques deux à deux, l'épissure étant protégée par un boîtier. L'ensemble des boîtiers d'épissure des fibres optiques sont en général placés dans un même conteneur, appelé ci-après boîte de raccordement.

Différentes techniques sont connues à l'heure actuelle pour effectuer ces raccordements parmi lesquelles, pour les câbles aériens, on peut citer :

- le raccordement en pleine portée, c'est-à-dire entre deux poteaux de soutènement des câbles, la boîte de raccordement étant alors accrochée également en pleine portée à un élément porteur ; les inconvénients de cette solution sont notamment le manque d'accessibilité, le fait de nécessiter un matériel important pour les interventions et le risque de perturbation de l'ensemble des lignes de transmission lors d'une intervention ;

- le raccordement de câbles en haut d'un poteau de soutènement, la boîte de raccordement étant alors portée par le poteau ; là aussi on rencontre des difficultés d'intervention comparables aux précédentes ;

2

- le raccordement en chambre souterraine, les deux câbles à raccorder étant alors guidés le long d'un poteau de soutènement vers la chambre souterraine ; l'accès au câble à raccorder est bien évidemment plus facile que dans les cas précédents mais cette solution nécessite un génie civil important.

La présente invention a pour objet un dispositif de raccordement permettant d'éviter les inconvénients précédents par l'utilisation d'une boîte de raccordement recevant les extrémités des câbles à raccorder, comportant une pluralité de modules indépendants, éventuellement amovibles ; chacun des modules porte un boîtier élémentaire d'épissure (ou un groupe de boîtiers) de deux supports de transmission et assure le stockage de la surlongueur d'éléments nécessaires pour effectuer les épissures dans une installation provisoire au sol. Quand les épissures sont réalisées, la boîte de raccordement est fixée par exemple sur le poteau.

Plus précisément, l'invention a pour objet un dispositif de raccordement de câbles comme caractérisé par la revendication 1.

Il apparaît ainsi qu'avec le dispositif selon l'invention, on dispose d'un accès aisé (au sol) et individuel (module) à chaque épissure ou groupe d'épissures, permettant notamment des interventions perturbant les autres liaisons au minimum, le tout à un coût également minimum.

D'autres objets, particularités et résultats de l'invention ressortiront de la description suivante, donnée à titre d'exemple non limitatif et illustrée par les dessins annexés, qui représentent :

- la figure 1, a et b, un premier mode de réalisation du dispositif de raccordement selon l'invention ;

- la figure 2, a et b, un deuxième mode de réalisation du dispositif selon l'invention ;

- la figure 3, un troisième mode de réalisation du dispositif selon l'invention ;

- la figure 4, un quatrième mode de réalisation du dispositif selon l'invention.

Sur ces différentes figures, les mêmes références se rapportent aux mêmes éléments.

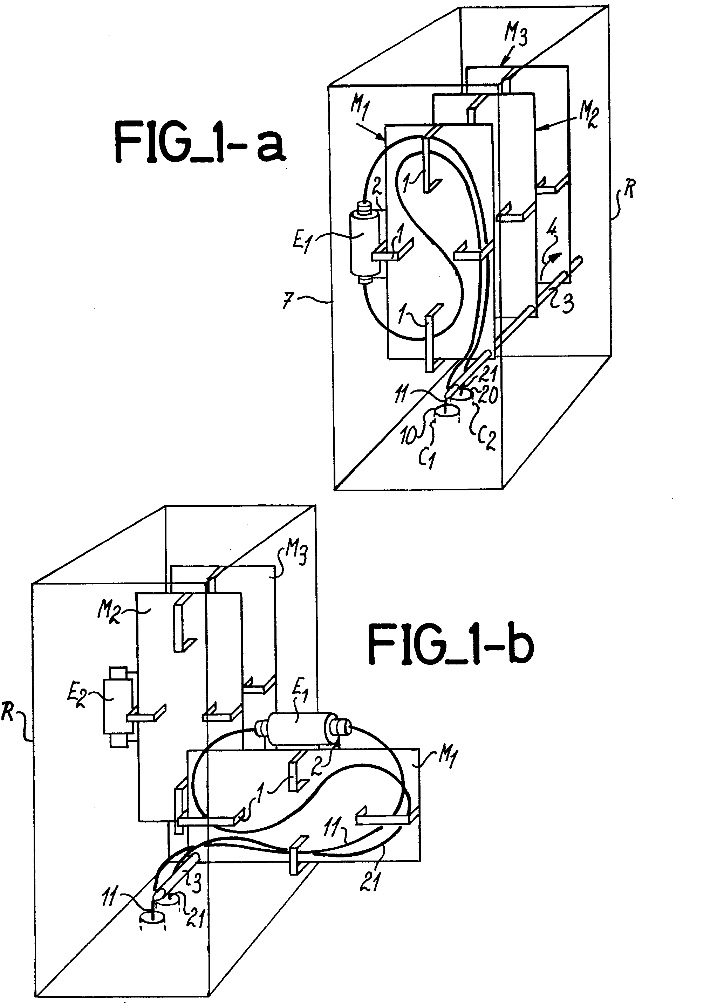

Sur les figures 1, a et b, on a donc représenté un mode de réalisation du dispositif de raccordement selon l'invention qui comporte une boîte de raccordement R dans lequel est placée une pluralité de modules M basculants, la figure 1a représentant la boîte de raccordement en position fermée et la figure 1b, la même boîte en position ouverte.

Sur les figures 1, la boîte de raccordement R est par exemple de forme parallélépipédique rectangle. Les modules sont par exemple en forme de plaques rectangulaires, montées parallèlement à l'une des faces (par exemple une face verticale 7) de la boîte R, et ils sont susceptibles de basculer (flèche 4) autour d'un axe 3, par exemple perpendiculaire à cette face 7. Sur la figure, on a représenté à titre d'exemple trois de ces modules $M_1$, $M_2$ et $M_3$.

Une des faces de la boîte de raccordement R, de préférence la face inférieure pour des raisons d'étanchéité, reçoit les extrémités de deux câbles $C_1$ et $C_2$ à raccorder. Les câbles pénètrent dans la boîte R par des ouvertures 10 et 20 qui assurent en outre leur fixation. Ainsi qu'il est connu, chacun des câbles porte en général une pluralité de supports de transmission ; sur les figures 1, on a représenté seulement un support pour chacun des câbles, à savoir un support 11 pour le câble $C_1$ et un support 21 pour le câble $C_2$, qui sont destinés à être raccordés entre eux par l'intermédiaire d'un même module, par exemple le module $M_1$. Les autres supports de ces mêmes câbles seront raccordés de la même manière deux à deux sur les modules suivants $M_2$, $M_3$ etc... Les supports 11 et 21 sont donc dirigés vers le module $M_1$ et plus précisément vers un boîtier d'épissure repéré $E_1$, fixé sur le module $M_1$ par des moyens de fixation 2, constitués par exemple par des clips. La surlongueur de supports 11 et 21 nécessaire aux opérations d'épissurage est fixée sur le module $M_1$ à l'aide de moyens de stockage 1, constitués par exemple sur les figures 1 par de simples barrettes.

Dans le cas où les câbles $C_1$ et $C_2$ sont des câbles optiques de structure cylindrique rainurée comme décrit plus haut, afin d'alléger le dispositif de raccordement, chacun des modules M est affecté à un jonc, les références 11 et 21 se rapportant alors chacune à un jonc portant une pluralité de fibres optiques et non plus à un seul support de transmission. Dans ce cas, les boîtiers d'épissure E réalisent chacun, dans un mode de réalisation préféré, l'épissure globale de l'ensemble des fibres portées par le jonc, comme décrit par exemple dans la demande de brevet français n° 81-03985 au nom de LTT.

Lors de la réalisation des opérations d'épissurage, la boîte de raccordement R est dans la position ouverte représentée sur la figure 1b, c'est-à-dire que le module sur lequel on réalise une épissure ($M_1$) a été basculé de 90° par rapport à sa position normale (figure 1a) autour de l'axe 3. L'épissurage est réalisé dans une installation provisoire annexe non représentée. Lorsque le boîtier d'épissure ($E_1$) est terminé, il est replacé sur sa fixation 2 et les surlongueurs des supports de transmission (ou des joncs) 11 et 21 sont placées dans les barrettes 1. Le module concerné ($M_1$) est ensuite replacé à l'intérieur de la boîte de raccordement R par simple basculement autour de l'axe 3. Un autre module M peut alors être sorti par basculement hors de la boîte R. Lorsque toutes les opérations d'épissurage sont terminées, la boîte R peut être fixée sur un poteau de soutènement des câbles, par exemple en haut de ce poteau, ou encore sur une traverse du poteau. Dans le cas où la boîte R est fixée en haut du poteau, les longueurs de câbles extérieures à la boîte de raccordement, nécessaires pour que l'épissure puisse se faire au sol, sont par exemples lovées (à l'extérieur de la boîte R) et fixées sur le poteau .

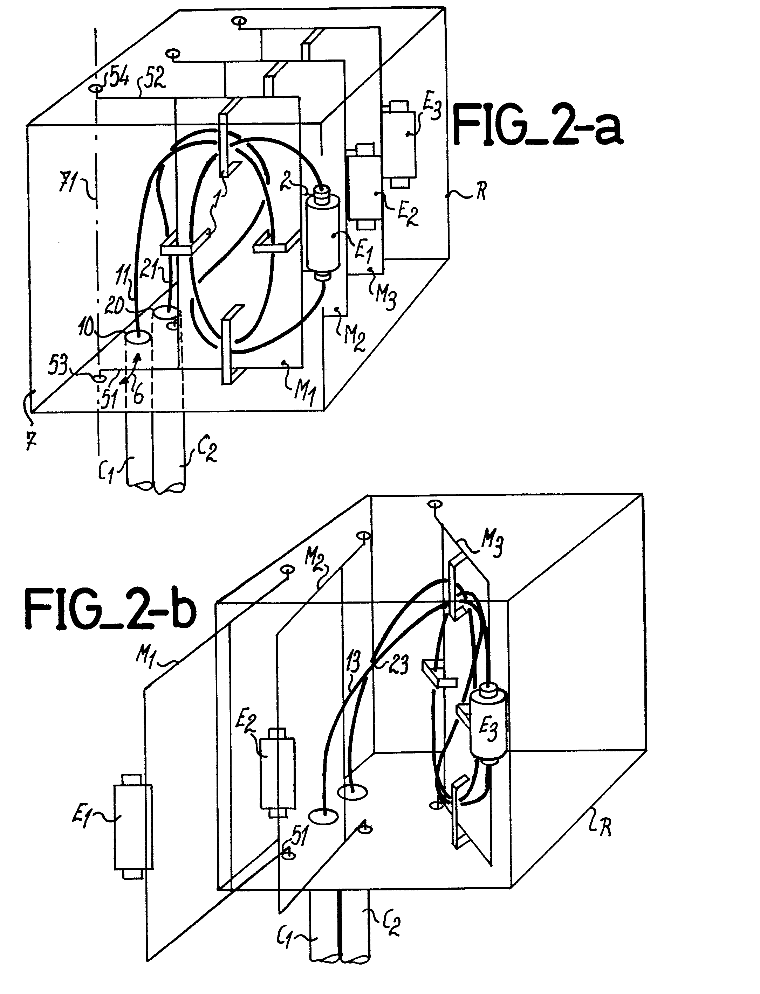

Les figures 2, a et b, représentent un deuxième mode de réalisation du dispositif selon l'invention, respectivement en position fermée et en position ouverte, dans lequel la boîte de raccordement comporte des modules pivotants.

Dans ce mode de réalisation, on retrouve la boîte de raccordement R, par exemple de forme parallélépipédique, qui porte une pluralité de modules, par exemple trois modules $M_1$ à $M_3$, constitués respectivement par des plaques, sensiblement parallèles à l'une des faces (7) de la boîte R. Comme précédemment, chacun des modules porte d'une part un boîtier d'épissurage E (respectivement $E_1$, $E_2$, $E_3$ pour les modules $M_1$, $M_2$, $M_3$) et des moyens 1 de stockage des supports de transmission 11 et 21. On retrouve également les deux câbles $C_1$ et $C_2$ à raccorder qui sont fixés sur la face inférieure de la boîte R, à des ouvertures 10 et 20.

Dans ce mode de réalisation, les modules M sont également susceptibles de rotation mais cette fois chacun des modules est susceptible de tourner (flèche 6) autour d'un axe de rotation distinct, par exemple l'axe 71 pour le module $M_1$, ces axes étant parallèles à la suface 7. L'axe 71 est par exemple vertical ; les bords horizontaux (inférieur et supérieur) de la plaque $M_1$ se prolongent par des tiges (51 et 52) recourbées susceptibles de pivoter dans des guides (respectivement 53 et 54) aménagés dans les faces horizontales de la boîte R.

La figure 2b représente la même boîte de raccordement R mais en position ouverte, les différents modules ayant tourné par rapport à leur position de la figure 2a de façon à rendre les boîtiers d'épissure E facilement accessibles.

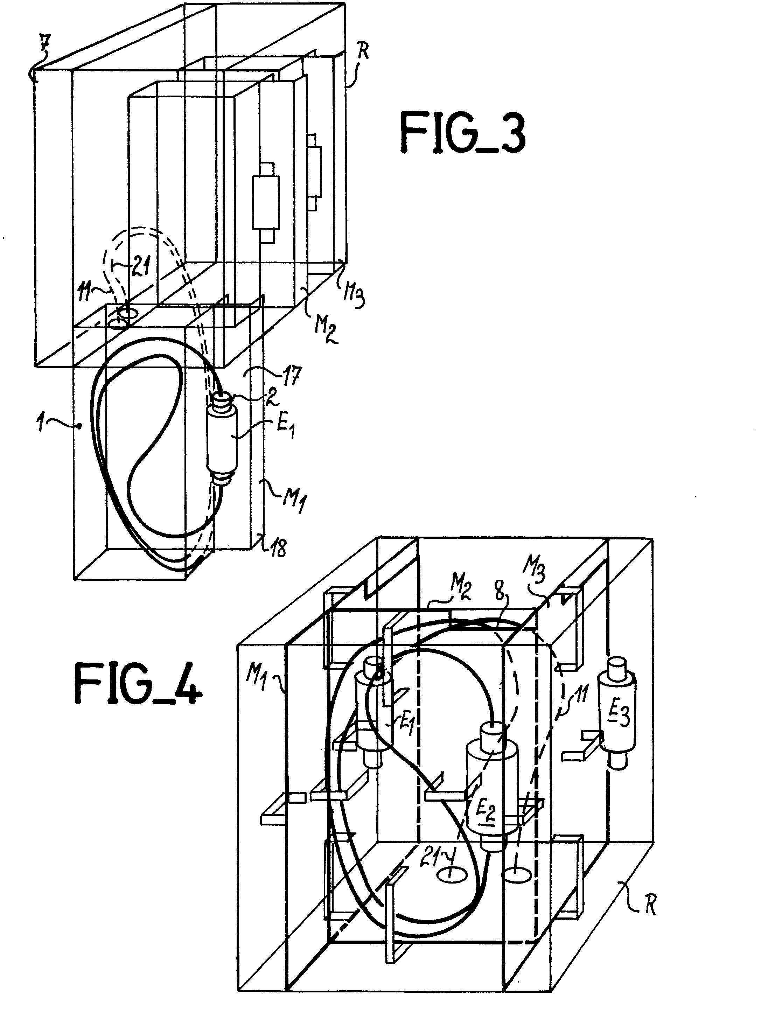

La figure 3 représente un autre mode de réalisation du dispositif selon l'invention dans lequel les modules sont coulissants.

On trouve dans ce mode de réalisation la boîte de raccordement R de forme générale parallélépipédique, contenant une pluralité de modules M (trois modules dans l'exemple de la figure) qui sont susceptibles de coulisser par exemple selon un plan vertical. Comme précédemment, chacun des modules M porte un boîtier d'épissure E et des moyens pour stocker la surlongueur des supports de transmission. Dans ce mode de réalisation, les modules se présentent sous la forme d'une plaque 17 parallèle à la face 7 de la boîte R, la plaque 17 portant sur une de ses faces une boîte 1 et, sur l'autre face, des moyens 18 permettant à la plaque 17 de coulisser ; ces moyens 18 sont constitués par exemple par une glissière en forme de U, comme représenté sur la figure, coopérant avec une glissière correspondante (non représentée) portée par la boîte R. La boîte 1 est fermée sur cinq de ses faces et sert de moyen de stockage de la surlongueur d'éléments 11 et 21, ceux-ci étant lovés et maintenus en position à l'aide de colliers, ou analogues (non représentés).

Enfin, chaque boîtier d'épissure E est fixé sur la plaque 17, à côté de la boîte 1, par des moyens 2, comme précédemment.

La figure 4 représente un autre mode de réalisation du dispositif selon l'invention dans lequel les modules sont fixes.

Dans ce mode on retrouve encore la boîte de raccordement R de forme sensiblement parallélépipédique portant une pluralité de modules M, par exemple trois sur la figure, fixés chacun parallèlement à une face distincte du parallèlépipède R ; de la sorte, ils ne sont plus parallèles entre eux. Les modules peuvent être réalisés selon l'un des modes de réalisation décrit précédemment. En outre ils peuvent par exemple présenter une encoche 8 pour permettre le passage des supports de transmission 11 et 21.

Ce mode de réalisation est plus particulièrement adapté au raccordement individuel de fibres optiques, c'est-à-dire au cas où les éléments 11 et 21 sont des fibres.

Le dispositif décrit ci-dessus est notamment applicable au raccordement de câbles optiques aériens.

Toutefois, cette application n'est pas limitative et il peut être également utilisé comme arrangement d'extrémités de câbles pour mise en attente, ou pour permettre une transition entre différents types de câbles, ou encore pour réaliser un éclatement d'un câble en câbles plus petits.

7

## REVENDICATIONS

1. Dispositif de raccordement de câbles, chacun des câbles comportant une pluralité de supports de transmission, le dispositif étant caractérisé par le fait qu'il comporte une boîte de raccordement (R) portant une pluralité de modules (M), chacun des modules (M) portant au moins un boîtier (E) d'épissure raccordant au moins deux supports de transmission (11, 21) appartenant respectivement à deux câbles à raccorder distincts ($C_1$, $C_2$) et des moyens de stockage (1) de surlongueurs desdits supports.

2. Dispositif selon la revendication 1, caractérisé par le fait que les modules (M) sont mobiles ou amovibles indépendamment les uns des autres.

3. Dispositif selon l'une des revendications précédentes, caractérisé par le fait que les modules (M) sont pivotants.

4. Dispositif selon l'une des revendications précédentes, caractérisé par le fait que les modules (M) sont coulissants.

5. Dispositif selon l'une des revendications précédentes, caractérisé par le fait que les modules sont sensiblement en forme de plaques.

6. Dispositif selon la revendication 5, caractérisé par le fait que les plaques sont disposées sensiblement parallèlement les unes aux autres.

7. Dispositif selon l'une des revendications précédentes, caractérisé par le fait que les extrémités des câbles à raccorder sont fixées sur une face de la boîte de raccordement (R).

8

8. Dispositif selon l'une des revendications précédentes, caractérisé par le fait que les câbles sont des câbles à fibres optiques.

9. Dispositif selon la revendication 8, caractérisé par le fait que les fibres sont portées par des joncs supports, chaque module étant affecté à deux joncs appartenant respectivement aux deux câbles, le boîtier d'épissure assurant l'épissurage de l'ensemble des fibres portées par les deux joncs.

# FIG_1-a

# FIG_1-b

FIG_2-a

FIG_2-b

0146478

FIG_3

FIG_4